# EUROPEAN PATENT SPECIFICATION

(11) **EP 3 470 707 B1**
(45) Date of publication and mention of the grant of the patent: **10.08.2022**
(21) Application number: 18200045.5
(22) Date of filing: 12.10.2018
(51) Int. Cl.: F16H 59/54, F16H 63/46, F16D 48/06, F16H 61/20, F16H 59/66, B60W 30/18

(54) **METHOD FOR CONTROLLING A TRANSMISSION PROVIDED WITH BRAKE TO CLUTCH FUNCTIONALITY**
VERFAHREN ZUM STEUERN EINES GETRIEBES MIT BREMS-ZU-KUPPLUNG-FUNKTIONALITÄT
PROCÉDÉ DE COMMANDE D'UNE TRANSMISSION ÉQUIPÉE D'UNE FONCTIONNALITÉ FREIN-EMBRAYAGE

(30) Priority: 13.10.2017 IT 201700115964
(43) Date of publication of application: 17.04.2019
(73) Proprietor: CNH Industrial Italia S.p.A., 10135 Torino (IT)
(72) Inventor: Berselli, Alberto, 41043 Modena (IT); Guidetti, Marco, 41012 Capri (Modena) (IT); Inversani, Alessio, 41030 Cavezzo (Modena) (IT); Petrigliano, Rocco, 75029 Valainni, MT (IT)
(74) Representative: CNH Industrial IP Department

(56) References cited:
- EP-A2- 0 375 162
- US-A1- 2010 048 354
- US-A1- 2011 288 735

## Description

### TECHNICAL FIELD OF THE INVENTION

The present invention concerns a method for controlling a transmission provided with brake to clutch functionality.

### BACKGROUND OF THE INVENTION

Working vehicles are nowadays equipped by dual clutch transmissions (DCT) in order to improve the performances of the vehicle itself, e.g. the velocity during the change of the speed ratios. Moreover, DCT are suitable for being easily automated.

Essentially, DCT comprises two large main clutches, namely forward and rearward clutches, configured to select two auxiliary shafts which carry the gears which define, the speed ratios which are selectable between an input shaft, namely the engine shaft, and an output shaft, namely the input shaft of the drive system of the working vehicle.

In order to improve driving comfort, the DCT transmission may be equipped with the so-called "Brake to clutch" functionality that provides opening automatically the clutch in use when the brake pedal is pressed and automatically reengaging the clutch when the brake pedal is released. This functionality is quite useful in some working conditions when the driver has continuously to start, hold and stop the working vehicle. The functionality reduces the use of the clutch pedal and improves driving comfort.

However, the above functionality may be critical in some working conditions, for instance when it is used with the working vehicle driving forwardly on an inclined surface towards a higher position or is driving reversely on the inclined surface towards the higher position. EP0375162 discloses a system for controlling the clutch of an automotive vehicle including a clutch engagement amount deciding means for deciding an amount of clutch engagement based on the braking force applied by a brake device. However this system is not suitable to hold a vehicle in uphill conditions when a brake to clutch functionality is in use.

In fact, in the above conditions the automatic opening and successive reengagement of the clutch may cause the vehicle to roll back in the opposite direction with respect the selected one because the torque transmitted through the clutch is temporarily not strong enough to compete with the gravity force. The delay in reengagement of the clutch may cause a dangerous situation that is worse with steeper slopes. This problem does not occur when driving downhill, whether in forward or in reverse, because gravity assists movement of the work vehicle in the correct direction and the normal "brake to clutch" functionality is sufficient.

The aim of the present invention is to provide a method of controlling a transmission provided with "Brake to clutch" functionality that prevents unwanted movement of the vehicle in the above conditions.

### SUMMARY OF THE INVENTION

The aforementioned aim is reached by a method as claimed in claim 1.

### BRIEF DESCRIPTION OF THE DRAWINGS

For a better understanding of the present invention, a preferred embodiment is described in the following, by way of a non-limiting example, with reference to the attached drawings wherein:
- Figure 1 is a first schematic representation of a vehicle provided with a transmission provided with "Brake to clutch" functionality according to the present invention;
- Figure 2 is a flow chart summarizing the main features of the method of the present invention; and
- Figure 3 represents some parameters controlled during the brake to clutch operation.

### DETAILED DESCRIPTION OF THE INVENTION

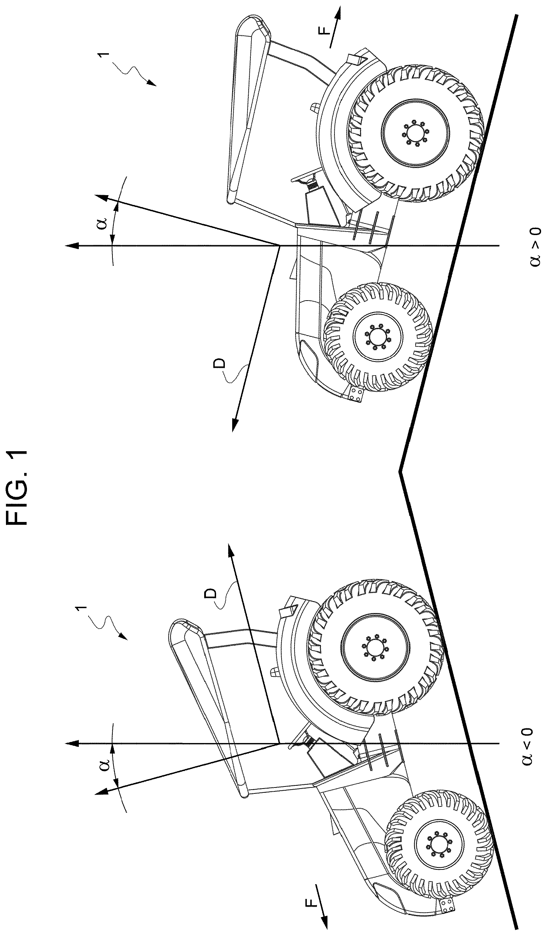

Figure 1 discloses schematically a working vehicle 1, in particular an agricultural vehicle such a tractor, provided - in the example - with an automated dual clutch transmission (DCT) of a known kind (not shown).

Essentially, a DCT comprises two large main clutches, namely forward and rearward clutches, configured to select two auxiliary shafts which carry the gears which define, the speed ratios which are selectable between an input shaft, namely the engine shaft, and an output shaft, namely the input shaft of the drive system of the working vehicle.

The dual clutch transmission or any powershift transmission provides according to known method a "Brake to clutch" functionality that provides opening automatically the clutch in use when the brake pedal is pressed, to avoid stalling the internal combustion engine, and automatically reengaging the above clutch when the brake pedal is released.

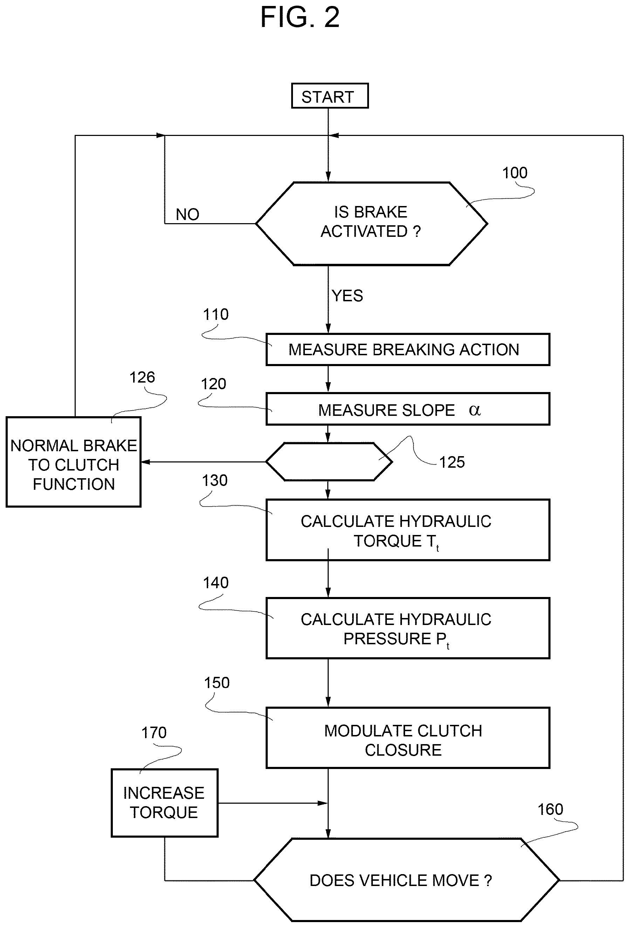

The method shall be described with reference to the flow chart of figure 2 that shows the control operation of the dual clutch transmission. In any case, the method also applies to transmissions other than DCT and provided with "Brake to clutch" functionality.

Block 100 checks if a braking action is activated by the driver; in the affirmative, block 110 is selected otherwise the method remains in closed the loop of block 100. For instance, block 100 may check if the brake pedal (not shown) has been pressed by the driver. To that regard, an additional pressure sensor (not shown) may be coupled to the already existing hydraulic circuit of a working vehicle to sense braking action. Preferably the pressure is measured on both final brakes when both brake pedals are depressed (L+R) by means of the reading of brake pedals electric switches in the cab. The braking action also activates the automatic opening of the clutch in use according to the known "Brake to clutch" functionality.

Block 110 detects the level of the braking action applied by the driver, for instance measures the braking pressure P_{bk} in the hydraulic braking system.

Block 110 is followed by block 120 that measures the angle α (see figure 1) between the vertical and a vector perpendicular to the moving direction D of the vehicle, i.e. the slope α.

If the vehicle is moving on a flat horizontal surface or on a surface having a negligible slope (the slope α is smaller than a threshold value close to zero) the clutch is opened disengaged and reengaged in a controlled way (see blocks 125 and 126) according a normal brake to clutch strategy.

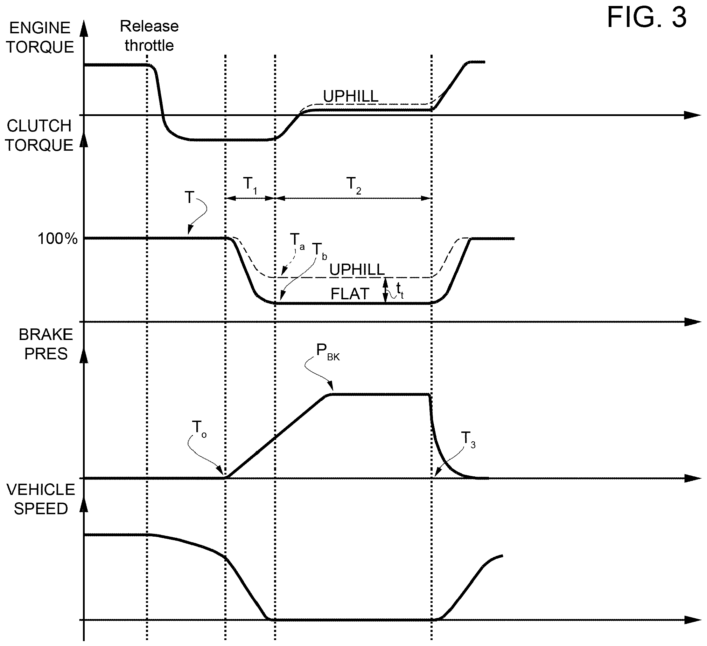

This operation is described with reference to figure 3.

The brake is activated at time To (brake pressure is indicated with P_{bk}, at time To brake pressure starts to rise according to a linear ramp and then remains constant). After a short delay after T₀ the torque transmitted through the clutch (the torque T transmitted according to brake to clutch functionality is indicated with solid line) starts to decrease during a transient time interval T₁ and reaches a limited value T_{b} for a subsequent time interval T₂. The clutch is therefore almost completely opened. Time interval T₂ ends when brake is released at time T₃ (brake pressure P_{bk} therefore suddenly decreases after time T₃). After time T₃ the torque transmitted through the clutch starts to increase during a transient time interval and reaches the maximum value (100%). The clutch is therefore fully closed.

The value of the torque T_{b} is calculated according to the braking pressure P_{bk} applied and based on the calculated brake pressure P_{bk} it is calculated the required hydraulic pressure that is provided to the clutch in use.

The calculated braking pressure P_{bk} to halt a work vehicle may be higher when the work vehicle is pulling a heavy trailer or a heavy implement, this change is also anticipated by the normal "brake to clutch" functionality.

Accordingly, on a substantially flat surface, the clutch control strategy opens and subsequently closes the clutch preventing any dissipation of energy due to a possible clutch slip against the braking action.

The absolute value of the slope is different from zero, i.e. α is higher than the threshold, when the vehicle is moving forwardly on an inclined surface towards a higher position (see figure 1 right side) or is moving reversely on an inclined surface toward the upper position (see figure 1, left side).

Block 120 is followed by a block 130 that, in the case that the absolute value of the slope α is higher than the threshold, calculates based on the instantaneous value of the slope α the target value of an additional torque Tt to be added to calculated torque T_{b} so that the total aggregated torque Tₐ that is transmitted through the clutch is sufficient so that the working vehicle 1 does not move in the opposite direction respect to the selected one, for instance does not roll along the inclined surface toward the lower position in the case that the vehicle is moving uphill.

Additional torque Tₜ may be defined based on information from a lookup table.

In figure 3 the total transmitted aggregated torque Tₐ is indicated with a dashed line.

This operation is described with reference to figure 3.

After the brake activation at time T₀, the torque transmitted through the clutch starts to decrease and reaches, after the transient time T₁ an aggregated value Tₐ = T_{b} + Tₜ that is kept almost constant during time T₂.

In other words, the clutch in use is partially engaged in order to transmit a torque corresponding to the aggregated torque Tₐ = T_{b} + Tₜ.

Also in this case after time T₃ (i.e. after the brake is released) the torque transmitted through the clutch starts to increase during a transient time interval and reaches the maximum value (100%). The clutch is therefore fully closed.

At standstill or near standstill this additional torque Tt is causing dissipation of extra heat in the clutch and therefore should be limited in time as much as possible. Activation of the park brake and emptying of the clutch in use may be triggered when a threshold time limit is exceeded.

The moving (driving) direction is sensed according known techniques, e.g. a signal based on the position of the shuttle shift lever, and the above clutch control is performed when the slope α is greater than the threshold (positive) and the vehicle is moving forwardly (i.e. the vehicle is moving forwardly to a higher position) or the slope α is higher than threshold (negative) and the vehicle is moving reverse (i.e. the vehicle is moving backwardly to the higher position).

Accordingly, the engine supplies an additional torque that works against the braking action (and thus consuming energy); however, the supply of the target torque also works against the forces F generated by the gravity action thus preventing the rolling of the vehicle toward the lower position against the selected driving direction.

The above clutch control is not performed when the slope α is greater than zero (positive) and the vehicle is moving backwardly (i.e. the vehicle is moving backwardly towards a lower position) or the slope α is smaller than zero (negative) and the vehicle is moving forwardly (i.e. the vehicle is moving forwardly towards a lower position). In this case the components of the forces F generated by the gravity are consistent with the moving direction. This control is also performed by block 125.

Slope α may be measured using an inclinometer and forward/reverse movement of the vehicle may be measured by means of a 3D accelerometer or detected by the position of the shuttle shift lever. If a 3D accelerometer is used, one of the three axes is used for representing the longitudinal vehicle slope.

More specifically a 3D map may be used; the 3D map providing target values of the additional torque Tt based on inputted values of slope α and braking pressure P_{bk.}

Block 130 is followed by block 140 that calculates, based on the aggregate torque Tₐ, the value of the hydraulic pressure Pa to be used in the clutch in use for transmitting the target value of the aggregate torque Tₐ. The clutch is thus modulated, i.e. controlled with pressure Pₐ (block 150 following block 140) so that the aggregate torque Tₐ is transmitted through the clutch in use.

Theoretically, the pressure Pa applied to the clutch should be the correct one to keep the working vehicle 1 in the above desired moving direction that is consistent to the selected one; however, the above calculation is based on a number of approximations and several factors are involved. Accordingly, the pressure Pa may be close to the correct one and the final value of pressure may be calculated with an extra closed loop control.

To that regard, block 150 is followed by block 160 that monitors if the vehicle is moving in a direction other the selected one; in the negative (the applied value of the pressure is the correct one and the vehicle does not roll in an un controlled manner in an a direction opposite to the selected one) the block 160 is followed by block 100, otherwise (the applied value of the pressure is not the correct one and the vehicle does roll in an un controlled manner in an a direction opposite to the selected one) block 160 is followed by block 170 that increases of a percentage the values of the pressure Pt to increase the value of the additional torque Tt. Block 170 is then followed by block 160.

## Claims

1. Method of controlling a transmission (DCT) of a working vehicle provided with a brake to clutch functionality that provides opening automatically the clutch when the brake pedal is pressed and automatically reengaging the clutch when the brake pedal is released, comprising the following steps:
measuring (120) the slope angle α between the vertical and a vector perpendicular to the moving direction of the vehicle;
checking (100) if a braking action is activated by the driver and measuring the applied level of braking action;
and **characterised by**:
if the absolute value of angle α is lower than a threshold opening the clutch to perform the brake to clutch functionality wherein a limited torque T_{b} is transmitted between opening and successive re-engagement of the clutch;
if the absolute value of angle α is higher than the threshold calculating based on the value of the measured slope α and on the measured level of the braking action applied by the driver the target value of an additional torque Tt to be added to the limited torque T_{b} so that the total aggregated value Tₐ = T_{b} + Tₜ of the torque transmitted through the clutch is sufficient for ensuring that the working vehicle (1) does not move in an opposite direction respect to the selected one; and
modulating the clutch closure in order to transmit said torque.

2. Method as claimed in claim 1, wherein the moving direction of the vehicle is measured and said additional torque Tₜ is applied when the slope α is positive and the vehicle is moving forwardly or the slope α is negative and the vehicle is moving reverse.

3. Method as claimed in claim 1 or 2, wherein the moving direction of the vehicle is measured and said additional torque Tₜ is not applied when the slope α is positive and the vehicle is moving reverse or the slope α is negative and the vehicle is moving forwardly.

4. Method as claimed in any of the proceedings claims, comprising the step of calculating, based on total aggregated value Tₐ, the value of the hydraulic pressure Pa to be used in the clutch for transmitting the total aggregated value Tₐ; the clutch closure is modulated with said pressure Pₐ.

5. Method as claimed in claim 4, wherein, the following steps are enabled:
monitoring if the vehicle is moving in a direction other than the selected one; and
increasing the value of the additional pressure Pₐ if the vehicle is moving in opposite direction respect the selected one.

6. Method as claimed in any of the proceedings claims, wherein said additional torque Tt is calculated using a map providing values of the additional torque Tt based on inputted values of slope α and braking action.

7. Method as claimed in any of the proceedings claims, wherein the level of the braking action applied by the driver is detected measuring braking pressure P_{bk} in a hydraulic braking system of the vehicle.

8. Method as claimed in any of the proceedings claims, wherein said slope is measured by elaborating the signal produced by an accelerometer.

9. Method as claimed in any of the proceedings claims, wherein the step of measuring the level of braking action comprise the step of measuring brake pressure.

## Patentansprüche

1. Verfahren zum Steuern eines Getriebes (DCT) eines Arbeitsfahrzeugs, das mit einer Brems-zu-Kupplung-Funktionalität ausgestattet ist, die ein automatisches Öffnen der Kupplung, wenn das Bremspedal gedrückt wird, und ein automatisches erneutes Eingreifen der Kupplung, wenn das Bremspedal gelöst wird, bewerkstelligt, mit den folgenden Schritten:
Messen (120) des Neigungswinkels α zwischen der Vertikalen und einem Vektor senkrecht zur Bewegungsrichtung des Fahrzeugs;
Überprüfen (100), ob ein Bremsvorgang durch den Fahrer aktiviert wird, und Messen der aufgebrachten Stärke des Bremsvorgangs; und
**gekennzeichnet durch**:
, wenn der absolute Wert des Winkels α geringer als ein Schwellenwert ist, Öffnen der Kupplung, um die Brems-zu-Kupplung-Funktionalität auszuführen, wobei ein begrenztes Drehmoment T_{b} zwischen dem Öffnen und dem darauffolgenden erneuten Eingreifen der Kupplung übertragen wird;
, wenn der absolute Wert des Winkels α höher als der Schwellenwert ist, Berechnen auf Basis des Wertes der gemessenen Neigung α und der gemessenen Stärke des Bremsvorgangs, die von dem Fahrer aufgebracht wird, des Soll-Werts eines zusätzlichen Drehmoments Tt, das zu dem begrenzten Drehmoment T_{b} hinzuaddiert wird, sodass der kumulierte Gesamtwert Tₐ = T_{b} + Tₜ des Drehmoments, das über die Kupplung übertragen wird, ausreicht, um sicherzustellen, dass sich das Arbeitsfahrzeug (1) nicht in einer entgegengesetzten Richtung bezüglich der gewählten Richtung bewegt; und
Modulieren des Schließens der Kupplung, um das Drehmoment zu übertragen.

2. Verfahren nach Anspruch 1, wobei die Bewegungsrichtung des Fahrzeugs gemessen wird und das zusätzliche Drehmoment Tt aufgebracht wird, wenn die Neigung α positiv ist und sich das Fahrzeug vorwärts bewegt oder wenn die Neigung α negativ ist und sich das Fahrzeug rückwärts bewegt.

3. Verfahren nach Anspruch 1 oder 2, wobei die Bewegungsrichtung des Fahrzeugs gemessen wird und das zusätzliche Drehmoment Tt nicht aufgebracht wird, wenn die Neigung α positiv ist und sich das Fahrzeug rückwärts bewegt oder wenn die Neigung α negativ ist und sich das Fahrzeug vorwärts bewegt.

4. Verfahren nach einem der vorhergehenden Ansprüche, aufweisend den Schritt des Berechnens, auf Basis des kumulierten Gesamtwerts Tₐ, des Werts des Hydraulikdrucks P_{a,} der in der Kupplung angewendet werden muss, um den kumulierten Gesamtwert Tₐ zu übertragen; wobei das Schließen der Kupplung mit dem Druck Pₐ moduliert wird.

5. Verfahren nach Anspruch 4, wobei die folgenden Schritte ermöglicht werden:
Überwachen, ob sich das Fahrzeug in einer Richtung bewegt, die von der gewählten Richtung verschieden ist; und
Erhöhen des Werts des zusätzlichen Drucks Pₐ, wenn sich das Fahrzeug in einer Richtung bewegt, die zur gewählten Richtung entgegengesetzt ist.

6. Verfahren nach einem der vorhergehenden Ansprüche, wobei das zusätzliche Drehmoment Tt unter Anwendung einer Zuordnungsvorschrift berechnet wird, die Werte des zusätzlichen Drehmoments Tt auf der Basis von eingegebenen Werten der Neigung α und des Bremsvorgangs bereitstellt.

7. Verfahren nach einem der vorhergehenden Ansprüche, wobei die Stärke des Bremsvorgangs, die von dem Fahrer aufgebracht wird, erfasst wird, indem der Bremsdruck P_{bk} in einem hydraulischen Bremssystem des Fahrzeugs gemessen wird.

8. Verfahren nach einem der vorhergehenden Ansprüche, wobei die Neigung durch ein Verarbeiten eines von einem Beschleunigungsmesser erzeugten Signals gemessen wird.

9. Verfahren nach einem der vorhergehenden Ansprüche, wobei der Schritt des Messens der Stärke des Bremsvorgangs den Schritt des Messens des Bremsdrucks aufweist.

## Revendications

1. Procédé de commande d'une transmission (DCT) d'un véhicule de travail doté d'une fonctionnalité frein-embrayage qui permet d'ouvrir automatiquement l'embrayage lorsque la pédale de frein est enfoncée et de réengager automatiquement l'embrayage lorsque la pédale de frein est relâchée, comprenant les étapes suivantes :
mesurer (120) l'angle de pente a entre la verticale et un vecteur perpendiculaire à la direction de déplacement du véhicule ;
vérifier (100) si une action de freinage est activée par le conducteur et mesurer le niveau appliqué de l'action de freinage ; et
**caractérisé par** :
si la valeur absolue de l'angle α est inférieure à un seuil, l'ouverture de l'embrayage pour réaliser la fonctionnalité frein-embrayage dans laquelle un couple limité T_{b} est transmis entre l'ouverture et le réengagement successif de l'embrayage ;
si la valeur absolue de l'angle α est supérieure au seuil, le calcul, sur la base de la valeur de la pente mesurée α et du niveau mesuré de l'action de freinage appliquée par le conducteur, de la valeur cible d'un couple additionnel Tt à ajouter au couple limité T_{b} de sorte que la valeur totale agrégée Tₐ = T_{b} + Tₜ du couple transmis par l'embrayage soit suffisante pour garantir que le véhicule de travail (1) ne se déplace pas dans une direction opposée à celle sélectionnée ; et
la modulation de la fermeture de l'embrayage afin de transmettre ledit couple.

2. Procédé selon la revendication 1, dans lequel la direction de déplacement du véhicule est mesurée et ledit couple additionnel Tt est appliqué lorsque la pente α est positive et que le véhicule se déplace vers l'avant ou lorsque la pente a est négative et que le véhicule se déplace en sens inverse.

3. Procédé selon la revendication 1 ou 2, dans lequel la direction de déplacement du véhicule est mesurée et ledit couple additionnel ⁻ Tₜ n'est pas appliqué lorsque la pente α est positive et que le véhicule se déplace en marche arrière ou lorsque la pente α est négative et que le véhicule se déplace vers l'avant.

4. Procédé selon l'une quelconque des revendications précédentes, comprenant l'étape consistant à calculer, sur la base de la valeur totale agrégée Tₐ, la valeur de la pression hydraulique Pa à utiliser dans l'embrayage pour transmettre la valeur totale agrégée Tₐ ; la fermeture de l'embrayage est modulée avec ladite pression Pₐ.

5. Procédé selon la revendication 4, dans lequel les étapes suivantes sont activées :
surveiller si le véhicule se déplace dans une direction autre que celle sélectionnée ; et
augmenter la valeur de la pression supplémentaire Pₐ si le véhicule se déplace dans une direction opposée à celle sélectionnée.

6. Procédé selon l'une quelconque des revendications précédentes, dans lequel ledit couple additionnel Tt est calculé à l'aide d'une carte fournissant des valeurs du couple additionnel Tt en fonction de valeurs saisies de la pente α et de l'action de freinage.

7. Procédé selon l'une quelconque des revendications précédentes, dans lequel le niveau de l'action de freinage appliquée par le conducteur est détecté en mesurant la pression de freinage P_{bk} dans un système de freinage hydraulique du véhicule.

8. Procédé selon l'une quelconque des revendications précédentes, dans lequel ladite pente est mesurée par élaboration du signal produit par un accéléromètre.

9. Procédé selon l'une quelconque des revendications précédentes, dans lequel l'étape de mesure du niveau d'action de freinage comprend l'étape de mesure de la pression de freinage.
